# DEMANDE DE BREVET EUROPEEN

(11) **EP 4 818 682 A1**
(43) Date de publication de la demande: **07.10.2026**
(21) Numéro de dépôt: 26159347.9
(22) Date de dépôt: 18.02.2026
(51) Int. Cl.: G01N 21/94, G01N 13/02, G01N 21/84, G01N 21/88, G01N 21/91

(54) **PROCÉDÉ ET DISPOSITIF DE DÉTERMINATION D'UN NIVEAU DE CONTAMINATION D'UNE SURFACE**

(30) Priorité: 31.03.2025 FR 2503317
(71) Demandeur: Airbus (S.A.S.), 31700 Blagnac (FR); Airbus Operations S.A.S., 31060 Toulouse (FR); Airbus Operations GmbH, 21129 Hamburg (DE)
(72) Inventeur: MORINIERE, Boris, 17300 ROCHEFORT (FR); BÜRGY, Olivier, 31060 TOULOUSE (FR); LELEU, Samuel, 31060 TOULOUSE (FR); CARMO, Rolim, 21129 HAMBURG (DE); LAGUTIN, Wladislav, 21129 HAMBURG (DE); OTTO, Matthias, 21129 HAMBURG (DE)
(74) Mandataire: Airbus-OPS SAS

(57) **Abrégé**

L'invention a pour objet un procédé de détermination du niveau de contamination d'une surface (11) comprenant un recouvrement (E1) de tout ou partie d'une surface (11) par des gouttes de fluide incolore (12) ayant toutes sensiblement le même volume, lesdites gouttes (12) étant déposées sur ladite surface (11), selon un schéma de dépose défini en fonction des contraintes suivantes : la distance entre deux gouttes de fluide incolore (16) déposées successivement est sensiblement constante et chaque goutte de fluide incolore (16) est espacée d'une distance non nulle des autres gouttes de fluide incolores (16) l'entourant. Le procédé comprend également les étapes successives : acquisition (E2) d'une image de la surface (11) à analyser, une étape de calcul (E3), une étape de comparaison (E4) et une étape de décompte (E5) afin d'obtenir la position des gouttes (16) pour lesquelles la surface (11) sous lesdites gouttes (16) est dite contaminée.

## Description

### EXPOSE DE L'INVENTION :

La présente invention concerne un procédé de détermination du niveau de contamination d'une surface, ainsi qu'un dispositif adapté à mettre en oeuvre un tel procédé.

La surface extérieure des aéronefs est peinte de plusieurs couches de peinture. La mise en oeuvre d'une opération de nettoyage des surfaces à peindre est essentielle avant l'étape d'application de chaque couche de peinture. En effet, une telle opération de nettoyage a pour but d'éliminer les contaminations (saleté, poussière, graisse...) susceptibles de limiter la durabilité du système de peinture et de dégrader les critères esthétiques. Une surface non contaminée garantie l'obtention d'une peinture durable et uniforme.

De manière classique, afin de vérifier que la surface à peindre n'est pas contaminée, les opérateurs effectuent un test de mouillabilité. Durant ce test, de l'eau est pulvérisée en quantité suffisante pour former un film continu et homogène sur la surface à analyser. La surface est jugée exempte de contamination si le film reste continu.

Il est également connu de l'état de l'art une utilisation d'un goniomètre afin de mesurer la valeur de l'angle de contact des gouttes et de déterminer la tension de surface. Le comportement de l'eau pulvérisée va varier en fonction de la propreté de la surface : si la surface est non contaminée, la goutte d'eau va s'étaler et la valeur mesurée de l'angle de contact de ladite goutte déposée sur la surface est faible. En revanche, sur une surface contaminée, les impuretés vont empêcher l'étalement de la goutte d'eau, augmentant ainsi la valeur de l'angle de contact de la goutte déposée sur la surface. Ce test, réalisé ponctuellement sur des points choisis de la surface, peut être réalisé par un robot afin d'automatiser le procédé.

Le brevet US2013135459 divulgue un procédé de détermination de la qualité de surface d'un verre. Ce procédé consiste à déposer un motif de gouttes sur la surface du verre à l'aide d'un dispositif de distribution.

Le brevet JP2015014522 divulgue une méthode d'inspection afin d'évaluer rapidement et simplement l'état de la surface d'un substrat avant l'application d'une gouttelette depuis une tête de revêtement.

Selon un autre dispositif connu, un robot comprend un système de pulvérisation de gouttelettes d'eau par brumisation, ledit système comprenant des buses à ultrasons, un système optique comprenant un capteur d'image ainsi que des moyens de traitement des informations générées par le capteur d'image, et une unité centrale pour assurer le fonctionnement du robot. Ces moyens de traitement comprennent des moyens de calculs, de type ordinateur, mettant en œuvre des logiciels de traitement des images reçues par le système optique. Pour la détection de contaminants, le robot met en place les étapes suivantes :
- une étape de mouillage de la surface de la pièce à analyser avec le dépôt d'un brouillard extrêmement fin d'eau purifiée, réalisée par le système de pulvérisation,
- une étape d'acquisition de l'image de la surface par le système optique, permettant la mesure du diamètre des gouttelettes présentes sur la surface avant leur évaporation,
- une étape d'analyse, mise en œuvre par le système optique, du motif des gouttelettes,
- une étape de détermination, mise en œuvre par le système optique, du niveau de contamination de la surface en fonction des résultats de l'analyse.

Ce type de robot offre des résultats probants. Cependant, il existe un besoin d'améliorer la précision de la localisation des zones contaminées sur la surface à analyser, afin d'optimiser l'intervention ultérieure des opérateurs chargés du nettoyage des surfaces à la main et donc de réduire la durée du processus.

L'un des objets de la présente invention est de remédier en tout ou partie à ce besoin.

A cet effet, la présente invention concerne un procédé de détermination du niveau de contamination d'une surface, tel que revendiqué dans la revendication 1.

Le dépôt des gouttes de fluide incolore, selon un schéma de dépose défini, permet une analyse précise du niveau de contamination de la surface.

### DESCRIPTION DETAILLEE :

Les caractéristiques de l'invention mentionnées ci-dessus, ainsi que d'autres, apparaîtront plus clairement à la lecture de la description suivante d'exemples de réalisation, ladite description étant faite en relation avec les dessins joints parmi lesquels :
La figure 1 est une vue schématique du dispositif de détermination d'un niveau de contamination d'une surface selon un premier mode de réalisation de l'invention ;
La figure 2 est une vue schématique visant à expliquer un calcul réalisé par le dispositif de détermination d'un niveau de contamination d'une surface représenté à la figure 1 ;
La figure 3 est un logigramme représentatif des étapes d'un procédé de détection d'un niveau de contamination d'une surface mis en œuvre par le dispositif de détermination d'un niveau de contamination d'une surface représenté de la figure 1 ;
La figure 4 est une vue schématique du dispositif de détermination d'un niveau de contamination d'une surface, selon un second mode de réalisation ;
La figure 5 est un logigramme représentatif des étapes du procédé de détection d'un niveau de contamination d'une surface mis en œuvre par le dispositif de détermination d'un niveau de contamination d'une surface de la figure 4 ;

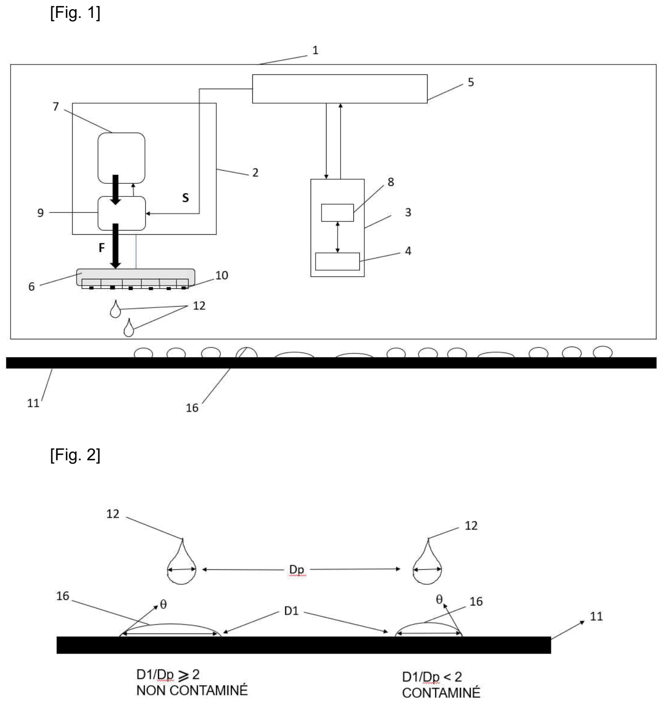

En référence avec la figure 1, un dispositif de détermination 1 d'un niveau de contamination d'une surface 11 comprend :
- un appareil d'impression 2, un système optique 3 pour la prise et l'analyse d'image sur la surface 11, le système optique 3 comprenant un capteur d'image 4, et des moyens d'analyse d'image 8, et
- une unité centrale 5, de type ordinateur, comportant une interface homme-machine permettant à un opérateur de donner des instructions au dispositif de détermination 1 d'un niveau de contamination d'une surface 11. L'unité centrale 5 coordonne les interactions entre les différents composants du dispositif de détermination 1 du niveau de contamination d'une surface 11 pour mettre en œuvre le procédé qui sera détaillé infra. En particulier, l'unité centrale 5 commande l'appareil d'impression 2.

Selon l'invention, l'appareil d'impression 2 comprend au moins une tête d'impression 6 d'un premier type. Cette tête d'impression 6 comprend un système de contrôle d'impression connu, qui ne sera pas plus détaillé.

Chaque tête d'impression 6 d'un premier type, de type piézoélectrique, est équipée d'une cartouche 7 de fluide, de pompes 9, et de buses 10 de type buses piézoélectriques par exemple, dont l'actionnement est commandé par l'unité centrale 5. Chaque tête d'impression 6 d'un premier type permet, en fonctionnement, une impression par jet d'encre.

La cartouche 7 de fluide sert de réservoir de fluide. Le fluide circule de la cartouche 7 vers les buses 10 grâce à l'actionnement des pompes 9. Le fluide présent dans la cartouche 7 est un solvant exempt de contaminants, ni acide ni basique, afin de ne pas endommager la surface 11. Le fluide est de l'eau purifiée, par exemple.

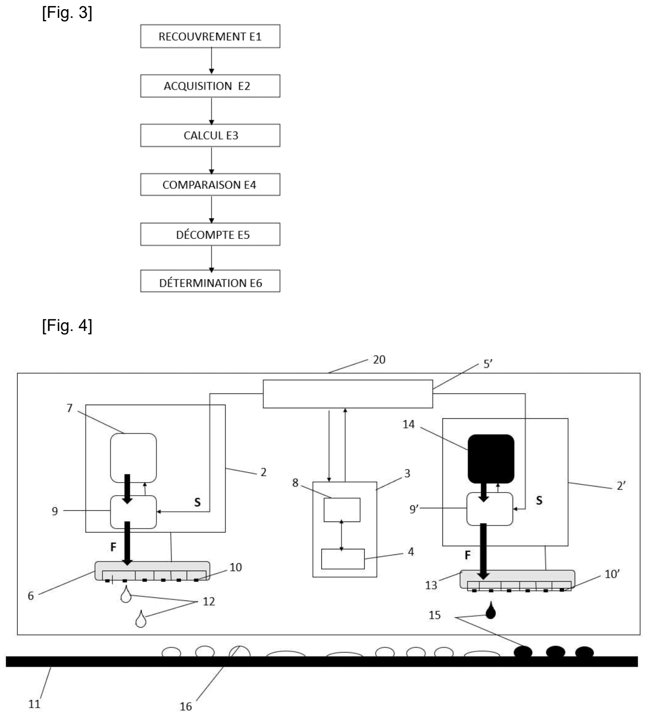

En référence avec la figure 1 et 4, le déplacement d'un fluide (F) est matérialisé par une flèche du même type que celle située entre les pompes 9 et la tête d'impression 6, par exemple. Les signaux (S) sont indiqués par une flèche, comme celle représentée entre l'unité centrale 5 et les pompes 9, par exemple. Les flèches de signaux (S) peuvent représenter des signaux de contrôle ou des signaux d'information, par exemple.

Les pompes 9 sont contrôlées par l'unité centrale 5 et lorsqu'elles sont activées, déplacent le fluide de la cartouche 7 vers les buses 10. Lesdites pompes 9 assurent un débit contrôlé par l'unité centrale 5 avec une pression constante dans les canaux, évitant les interruptions de débit, afin d'obtenir une projection précise des gouttes 12. Des capteurs de pression sont arrangés entre l'entrée et la sortie de la tête d'impression 6 afin que l'unité centrale 5 puisse agir sur les pompes 9 dans le cas où la différence de pression mesurée entre l'entrée et la sortie de la tête d'impression s'écarte d'une valeur nominale.

Chaque tête d'impression 6 d'un premier type contient plusieurs buses 10, tel qu'une centaine par exemple. Les buses 10 des têtes d'impression 6 d'un premier type sont toutes identiques, en particulier en ce qui concerne le diamètre de leur orifice. Ce diamètre est dimensionné de manière à ce que les gouttes 12 sortant des buses 10 aient un volume compris entre 1 et 1000 picolitres.

Lors de l'utilisation du dispositif 1, les buses 10 sont orientées face à la surface 11 à analyser. La configuration des buses 10 est choisie en fonction des dimensions de la surface 11 à analyser.

Comme cela est connu, chaque goutte de fluide incolore 12 déposée sur la surface 11 présente des propriétés d'interaction différentes selon la propreté de la surface 11 : sur une surface 11 non contaminée, la goutte 12 s'étale au contact de la surface 11 et la goutte 16 résultante présente un diamètre important. Dans cette situation, la valeur de l'angle de contact de la goutte 16 analysée est faible. En revanche, au contact d'une surface contaminée, la goutte 12 ne s'étale pas et la goutte 16 résultante présente un diamètre faible. Dans cette situation, la valeur de l'angle de contact de la goutte 16 analysée est élevé.

Le système optique 3 comprend un capteur d'image 4 et des moyens d'analyse d'image 8, de type ordinateur, ledit système optique 3 met en en oeuvre des logiciels de traitement des images reçues du capteur d'image 4.

Les logiciels permettent la mesure du diamètre D1 des gouttes 16 obtenues en effectuant cette mesure à leur base après leur dépôt sur une surface 11.

Le capteur d'image 4 capture des images de la surface 11 en temps réel, synchronisées avec le déplacement des têtes d'impression 6 d'un premier type. Le dispositif de détermination 1 permet le dépôt progressif des gouttes 12 sur la surface 11. Les moyens d'analyse d'images 8 traitent les images reçues, identifient les gouttes et pour chacune des gouttes 12,16, un ratio est calculé entre un diamètre D1 mesuré à la base de ladite goutte 16 après son dépôt sur la surface 11 et un diamètre prédéterminé Dp des gouttes 12 (D1/Dp).

Le diamètre prédéterminé Dp d'une goutte 12 est obtenu par mesure en laboratoire du diamètre d'une goutte 12 libérée d'une buse 10 d'une tête d'impression 6 d'un premier type, et avant que la goutte 12 ne touche une surface 11.

Un ratio est obtenu pour chaque goutte 12,16 de l'ensemble, et ce ratio est comparé à un seuil prédéterminé.

Le seuil prédéterminé est fonction de la surface 11 (rugosité, mouillabilité...), du volume des gouttes libérées par les buses 10, du fluide utilisé pour les gouttes 12 et du choix de la valeur de l'angle de contact des gouttes 16 pris par les opérateurs pour déterminer qu'une goutte est située sur une surface contaminée ou non contaminée.

Par exemple, ce seuil pourra être calculé grâce à la formule suivante : $r = \frac{3}{π} \sqrt[3]{\frac{V}{\left(2+cos\left(θ\right)\right) {\left(1-cos\left(θ\right)\right)}^{2}}}$ $h = r \left(1-cos\left(θ\right)\right)$ $d = 2 \sqrt{h \left(2r-h\right)}$
θ = angle de contact de la goutte 16
V = Volume de la goutte 12,16
r = rayon de la goutte 12, 16
d = diamètre de la goutte 12,16
h = hauteur de la goutte 12,16

En référence avec la figure 2, dans l'exemple d'un volume de goutte sensiblement égal à 100 pl et pour le choix d'une valeur d'un angle de contact inférieur à 30° considéré comme une valeur d'angle en dessous de lequel la surface sous la goutte 16 est dite non contaminée, le seuil prédéterminé est égal à 2. Le ratio (D1/Dp) doit donc être supérieur ou égal à 2 pour que la surface sous la goutte 16 soit considérée comme non contaminée. Avec ces hypothèses, le diamètre D1 et le diamètre Dp ont été calculés selon les formulations précédentes. Le ratio (D1/Dp) est égal à 2,068, ce qui implique une surface sous la goutte 16 non contaminée.

A contrario, si le ratio (D1/Dp) est inférieur à 2, la surface située sous les gouttes 16 est considérée comme contaminée.

En référence avec la figure 3, le dispositif de détermination 1 d'un niveau de contamination d'une surface 11 met en œuvre le procédé suivant. A cet effet, le dispositif 1 est rapproché de la surface 11 à analyser, avec les orifices des buses 10 orientées vers ladite surface.

Dans une étape préliminaire de préparation E0, non représentée, l'opérateur agissant sur l'unité centrale 5 déclenche la prise de vue, par le système optique 3, d'une image de la surface 11 à analyser. L'unité centrale 5 comprend des logiciels qui affichent l'image ainsi prise, permettant à l'opérateur de choisir la ou les parties de ladite surface 11 à traiter par le dispositif de détermination 1 d'un niveau de contamination d'une surface 11. Dans cette étape préliminaire de préparation E0, les opérateurs indiquent le seuil prédéterminé à prendre en compte dans les étapes suivantes du procédé. Les opérateurs disposent, par exemple, de tables de référence indiquant, pour chaque type de surface, le seuil prédéterminé à saisir dans l'unité centrale 5.

Dans la suite du procédé, l'opérateur est considéré comme ayant choisi de traiter la totalité de la surface.

Dans une étape de recouvrement E1, consécutive à l'étape de préparation E0, la surface 11 dont le niveau de contamination est à évaluer, est recouverte de gouttes de fluide incolore 16 déposées selon un schéma de dépose. Ce schéma est défini par l'unité centrale 5 en fonction de la configuration de la surface, c'est-à-dire ses dimensions, et de sorte à respecter les contraintes suivantes :
- la distance entre deux gouttes de fluide incolore 16 déposées successivement est sensiblement constante,
- chaque goutte de fluide incolore 16 est espacée d'une distance non nulle des autres gouttes de fluides incolores 16 l'entourant.

Dans une étape d'acquisition E2, subséquente à l'étape de recouvrement E1, le système optique 3 précédemment décrit, acquiert l'image de la surface 11 à analyser recouverte par les gouttes de fluide incolore 16 déposées, et mesure les diamètres à la base desdites gouttes 16. La mesure effectuée à la base des gouttes dépend de la vitesse d'avancement du dispositif de détermination 1 du niveau de contamination d'une surface 11. Il est également rappelé que le diamètre à la base d'une goutte 16 sur la surface 11 est fonction de la présence ou non de contamination sous la goutte 16.

Dans une étape de calcul E3, subséquente à l'étape d'acquisition E2, et pour chacune des gouttes 12,16, le système optique 3 calcule le ratio entre le diamètre D1 mesuré à la base de ladite goutte 16 et le diamètre prédéterminé Dp de la goutte 12 (D1/Dp).

Dans une étape de comparaison E4, subséquente à l'étape de calcul E3, et pour chacune des gouttes 12,16, le système optique 3 compare le ratio précédemment calculé au seuil prédéterminé.

Dans une étape de décompte E5, subséquente à l'étape de comparaison E4, le système optique 3 comptabilise le nombre de gouttes 16 dont le ratio est inférieur au seuil prédéterminé et la position de ces gouttes 16 sur la surface 11 est enregistrée, dans une mémoire du système optique 3.

Dans une étape de détermination E6, subséquente à l'étape de décompte E5, le système optique 3 détermine un niveau de contamination de la surface 11, qui dépend du nombre décompté à l'étape de décompte précédente et du nombre total de gouttes 16 déposées sur la surface 11.

Le dépôt des gouttes 12 selon un schéma de dépose défini permet une analyse précise du niveau de contamination de la surface 11.

Dans un second mode de réalisation, et en référence avec la figure 4, le dispositif de détermination 20 d'un niveau de contamination d'une surface 11 est modifié par rapport au dispositif précédemment décrit en ce que le dispositif de détermination 20 d'un niveau de contamination d'une surface 11 comprend l'addition d'au moins une tête d'impression 13 d'un second type ainsi qu'un système de contrôle d'impression connu associé à ladite tête d'impression 13. Les têtes d'impression 13 d'un second type sont en tout points similaires à la tête d'impression 6 d'un premier type, à l'exception d'une cartouche 14 contenant une encre de couleur, en lieu et place du fluide incolore présent dans la cartouche 7 de la tête d'impression 6 d'un premier type.

La couleur de l'encre est choisie différente de la couleur de la surface 11 à analyser, afin d'optimiser la visibilité de l'encre lors du nettoyage de ladite surface 11. En effet, l'encre colorée permet de restituer in-situ l'information concernant le lieu exact de la contamination à l'opérateur. L'encre utilisée est soluble avec le solvant utilisé lors du nettoyage des zones contaminées de la surface.

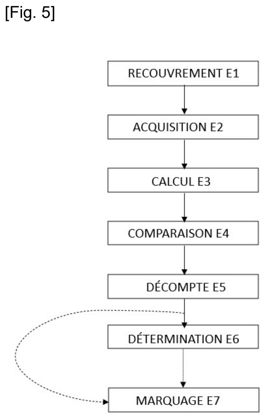

En référence avec la figure 5, le procédé mis en œuvre par le dispositif de détermination 20 d'un niveau de contamination d'une surface 11 diffère du procédé précédemment décrit en ce qu'il comprend une étape additionnelle de marquage visuel E7 des zones contaminées, subséquente à l'étape de décompte E5. L'étape de marquage visuel peut avoir lieu avant ou après l'étape de détermination E6.

L'étape de marquage visuel E7 des zones contaminées est réalisée grâce au dépôt de gouttes d'encre 15 à l'aide de la tête d'impression 13 d'un second type et de son système de contrôle d'impression connu associé. Les gouttes d'encre colorées 15 sont déposées au droit sur les gouttes de fluide incolore 16 ayant un ratio inférieur au seuil prédéterminé.

A l'issue du procédé mis en œuvre par le dispositif de détermination 20 d'un niveau de contamination d'une surface 11, le marquage visuel des zones contaminées au moyen du dépôt des gouttes d'encre 15 permet à l'opérateur de visualiser rapidement les zones contaminées nécessitant un nettoyage. Le nettoyage des zones ainsi marquées sur la surface 11 a lieu manuellement, par exemple à l'aide de lingettes pré-imprégnées de solvant.

Cette étape supplémentaire du procédé présente également l'avantage de réduire les nettoyages inutiles et de limiter la consommation des ressources, telles que les lingettes et les solvants, contribuant ainsi à une gestion plus efficace des opérations de nettoyage. De plus, l'automatisation de la détection du niveau de contamination d'une surface permet d'anticiper une éventuelle contamination et évite des étapes de reprise d'état de surface préjudiciable dans le contexte d'une chaîne de production.

## Revendications

1. Procédé de détermination du niveau de contamination d'une surface (11), le procédé comprenant les étapes successives suivantes:
• Recouvrement (E1) de tout ou partie de la surface (11) par des gouttes de fluide incolore (12), ayant toutes sensiblement le même volume, lesdites gouttes (12) étant déposées sur ladite surface (11), selon un schéma de dépose défini en fonction de la configuration de la surface (11) et respectant les contraintes suivantes :
- la distance entre deux gouttes de fluide incolore (16) déposées successivement est sensiblement constante,
- chaque goutte de fluide incolore (16) est espacée d'une distance non nulle des autres gouttes de fluides incolores (16) l'entourant.
• Acquisition (E2) d'une image de la surface (11) à analyser ainsi recouverte par des gouttes de fluide incolore (16),
• Calcul (E3), pour chacune desdites gouttes (12,16) d'un ratio entre un diamètre (D1) et un diamètre prédéterminé (Dp) des gouttes (12), le diamètre (D1) étant mesuré à la base de ladite goutte (16).
• Comparaison (E4), pour chaque goutte (12,16), du ratio précédemment calculé à un seuil prédéterminé,
• Décompte (E5) par le système optique (3) du nombre de gouttes (16) pour lesquelles la surface (11) sous la goutte (16) est dite contaminée, et enregistrement de la position de ces gouttes (16) sur la surface (11),
• Détermination (E6) d'un niveau de contamination de la surface (11), ledit niveau étant fonction du nombre décompté à l'étape précédente et du nombre de gouttes totales déposées sur la surface (11),
**caractérisé en ce que** le procédé comprend une étape de marquage visuel (E7), mise en oeuvre après l'étape de décompte (E5), et dans laquelle une tête d'impression (13) dépose des gouttes d'encre colorées (15), ladite encre colorée étant contenue dans une cartouche (14), lesdites gouttes d'encre colorée (15) étant déposées sur la surface (11), à l'emplacement desdites gouttes de fluide incolore (12) qui présentent un ratio inférieur au seuil prédéterminé.

2. Procédé de détermination selon la revendication 1, **caractérisé en ce que** le fluide incolore est de l'eau purifiée.

3. Procédé de détermination selon l'une des revendications précédentes, **caractérisé en ce que** la couleur de l'encre présente dans la cartouche (14) est choisie différente de celle de la surface (11) à traiter.

4. Dispositif de détermination (1,20) d'un niveau de contamination d'une surface (11), apte à mettre en œuvre le procédé de détermination selon l'une quelconque des revendications précédentes, ledit dispositif (1,20) comprenant un appareil d'impression (2,2') comportant au moins une tête d'impression (6,13), un système optique (3) pour la prise et l'analyse d'image sur la surface, ledit système optique (3) comprenant un capteur d'image (4) et des moyens d'analyse d'image (8), une unité centrale (5,5') contrôlant l'appareil d'impression (2,2'), chaque tête d'impression (6,13) comprend une cartouche de fluide (7,14), des pompes (9,9'), et des buses (10,10') de type buses piézoélectriques, dont l'actionnement est commandé par l'unité centrale (5,5') **caractérisé en ce que** la tête d'impression (13) d'un second type et de son système de contrôle d'impression connu associé dépose au droit des gouttes d'encre colorées (15) sur les gouttes de fluide incolore (16) ayant un ratio inférieur au seuil prédéterminé.
